# EUROPEAN PATENT SPECIFICATION

(11) **EP 3 520 263 B1**
(45) Date of publication and mention of the grant of the patent: **17.09.2025**
(21) Application number: 17785102.9
(22) Date of filing: 29.09.2017
(51) Int. Cl.: H04L 1/00, H04B 7/06, H04L 5/00

(54) **METHOD OF APERIODIC CSI-RS INDICATION FOR NEW RADIO**
VERFAHREN ZUR APERIODISCHEN CSI-RS-ANZEIGE FÜR NEUEN FUNK
PROCÉDÉ D'INDICATION D'UN CSI-RS APÉRIODIQUE POUR UNE NOUVELLE RADIO

(30) Priority: 29.09.2016 US 201662401722 P
(43) Date of publication of application: 07.08.2019
(73) Proprietor: Apple Inc., Cupertino, CA 95014 (US)
(72) Inventor: DAVYDOV, Alexei, Nizhny Novgorod 603132 (RU); LEE, Wook Bong, Pleasanton, California 94588 (US); ZHU, Yuan, CN 100012 (CN); SERGEEV, Victor, Nizhny Novgorod 603163 (RU); PAWAR, Sameer, Santa Clara, California 95050 (US)
(74) Representative: Lang, Johannes
(86) International application number: PCT/US2017/054527
(87) International publication number: WO 2018/064590

(56) References cited:
- EP-A1- 2 966 931
- WO-A1-2016/122391
- US-A1- 2016 227 548
- SAMSUNG: "Additional details on aperiodic CSI-RS", vol. RAN WG1, no. Gothenburg, Sweden; 20160822 - 20160826, 12 August 2016 (2016-08-12), XP051142177, Retrieved from the Internet <URL:http://www.3gpp.org/ftp/tsg_ran/WG1_RL1/TSGR1_86/Docs/> [retrieved on 20160812]
- HUAWEI ET AL: "CSI measurement and feedback for LAA", vol. RAN WG1, no. Belgrade, Serbia; 20150420 - 20150424, 10 April 2015 (2015-04-10), XP050949749, Retrieved from the Internet <URL:http://www.3gpp.org/ftp/tsg_ran/WG1_RL1/TSGR1_80b/Docs/> [retrieved on 20150410]
- HUAWEI ET AL: "CSI enhancements for TDD eIMTA", vol. RAN WG1, no. Guangzhou, China; 20131007 - 20131011, 28 September 2013 (2013-09-28), XP050717240, Retrieved from the Internet <URL:http://www.3gpp.org/ftp/tsg_ran/WG1_RL1/TSGR1_74b/Docs/> [retrieved on 20130928]

## Description

### BACKGROUND

Wireless systems typically include multiple User Equipment (UE) devices communicatively coupled to one or more Base Stations (BS). The one or more BSs may be Long Term Evolved (LTE) evolved NodeBs (eNB) or New Radio (NR) next generation NodeBs (gNB) that can be communicatively coupled to one or more UEs by a Third-Generation Partnership Project (3GPP) network.

Next generation wireless communication systems are expected to be a unified network/system that is targeted to meet vastly different and sometimes conflicting performance dimensions and services. New Radio Access Technology (RAT) is expected to support a broad range of use cases including Enhanced Mobile Broadband (eMBB), Massive Machine Type Communication (mMTC), Mission Critical Machine Type Communication (uMTC), and similar service types operating in frequency ranges up to 100 GHz.
The patent document US 2016/227548 A1 discloses the sending, from the network to the UE, of two separate DCIs with respective scheduling of aperiodic CSI-RS and uplink grant for aperiodic CSI reporting. The first DCI indicates the CSI-RSI resource elements.
The 3GPP draft "Additional details on aperiodic CSI-RS", R1-166728, discloses a so called "two step" configuration of aperiodic CSI-RS resources. The aperiodic resource configuration consists of two downlink signalling messages (RRC and UL/DL grant) which are sent prior to the UL grant, the latter indicating the aperiodic CSI request and providing the uplink resources for the subsequent CSI report.
The 3GPP draft "CSI measurement and feedback for LAA", R1-151301, discloses that the non-periodic CSI-RS information may be sent on a DL Grant of physical layer control signalling. The DL Grant refers to a DCI format for sending resource allocation information related to a downlink data channel, for example, the DCI formats 2B and 2C in the related art belong to DL Grants. This DCI precedes a subsequent DCI indicating an UL grant and commanding the corresponding CSI feedback triggering.
The 3GPP draft "CSI enhancements for TDD eIMTA", R1-134048, discloses two approaches for the signalling of the aperiodic CSI-RS resources. According to "approach one", the occurrence of CSI-RS (carriers and time) is signalled within an specific DCI message. In the so called "approach two", the presence of CSI-RS is indicated within the UL grant which triggers the aperiodic CSI report.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG 1 illustrates an example of an aperiodic channel state information reference symbol (CSI-RS) transmission in LTE/5GTF in accordance with an example;
FIG 2 illustrates an example of an aperiodic CSI-RS transmission, using dedicated downlink control information (DCI) in accordance with an example;
FIG 3 depicts an example of a CSI-RS starting position indication in accordance with an example;
FIG 4 depicts an example of a channel state information interference measurement (CSI-IM) starting position indication in accordance with an example;
FIG 5 illustrates an example of an aperiodic CSI-RS transmission, using DCI scheduling CSI in accordance with an example;
FIG 6 depicts a flow chart of an apparatus of an evolved node B (eNB) configured for an aperiodic transmission indication of a channel state information reference signal (CSI-RS) in accordance with an example;
FIG 7 depicts a flow chart of an apparatus of a user equipment (UE) configured for an aperiodic reception indication of a channel state information reference signal (CSI-RS), in accordance with an example;
FIG 8 depicts a flow chart of an apparatus of a next generation node B (gNB) configured for an aperiodic transmission indication of a channel state information interference management (CSI-IM), in accordance with an example;
FIG 9 illustrates an architecture of a system 900 of a network in accordance with some embodiments;
FIG 10 illustrates a diagram of a wireless device (e.g., UE) and a base station (e.g., eNodeB) in accordance with an example;
FIG 11 illustrates example interfaces of baseband circuitry in accordance with some embodiments; and
FIG 12 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

### DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in uplink (UL). Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems (e.g., Release 13 and earlier), the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). In 3GPP fifth generation (5G) LTE communication systems, the node is commonly referred to as a new radio (NR) or next generation Node B (gNodeB or gNB). The downlink (DL) transmission can be a communication from the node (e.g., eNodeB or gNodeB) to the wireless device (e.g., UE), and the uplink (UL) transmission can be a communication from the wireless device to the node.

Wireless systems typically include multiple User Equipment (UE) devices communicatively coupled to one or more Base Stations (BS). The one or more BSs may be Long Term Evolved (LTE) evolved NodeBs (eNB) or New Radio (NR) next generation NodeBs (gNB) that can be communicatively coupled to one or more UEs by a Third-Generation Partnership Project (3GPP) network. The UE can be one or more of a smart phone, a tablet computing device, a laptop computer, an internet of things (IOT) device, and/or another type of computing devices that is configured to provide digital communications. As used herein, digital communications can include data and/or voice communications, as well as control information.

The present technology (e.g. LTE) describes an aperiodic channel state information reference symbol (CSI-RS), which can be signaled to the UE by using downlink control information (DCI) indicating an uplink (UL) grant for CSI reporting.

In one example, in the downlink (DL) subframe, upon receiving a UE-specific DCI triggering CSI calculation and reporting on a physical uplink shared channel (PUSCH), the UE can assume that the CSI-RS for CSI measurements is present in the corresponding DL sub frame.

In one example, the 3GPP LTE Release 13 mechanism for UE-specific CSI-RS can be improved by allowing the transmission of CSI-RS on the later subframe and indicating an uplink subframe for CSI-RS transmission and CSI feedback. It should be noted that the 3GPP LTE Rel. 13 approach of CSI-RS transmission is not flexible enough and uses simultaneous scheduling of the DL and UL direction over several subframes. It should be also noted that aperiodic interference measurements in the Release 13 approach is also not supported.

In one example, it is proposed that there can be aperiodic CSI-RS and Channel-State Information - Interference Measurement (CSI-IM) triggering using dedicated DCI, wherein dedicated DCI can be transmitted in the common search space (CSS) or UE-specific search space. The dedicated DCI can include the following information about CSI-RS / CSI-IM transmission: scheduled physical resource blocks (PRBs); scheduling delay information; number of antenna ports; a CSI-RS / CSI-IM process index and a CSI-RS / CSI-IM update indication.

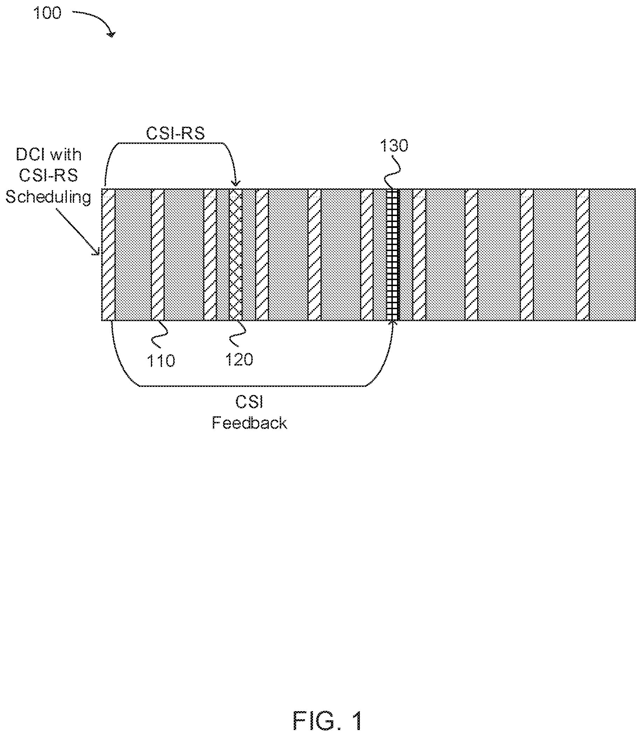

FIG 1 illustrates an example of an aperiodic CSI-RS transmission 100 in a 3GPP LTE Release 13 system. The illustrated approach of an aperiodic CSI-RS transmission 100, provides for an inflexible transmission that uses simultaneous scheduling of the downlink (DL) and uplink (UL) direction over several subframes. The aperiodic transmission 100, can comprise of one or more DCI's 110 that can occur periodically throughout the transmission cycle. Additionally there can be a CSI-RS transmission 120 that takes place between one or more DCI's 110. There can further be a CSI Feedback indication 130, providing for an indicated uplink subframe, through the transmission of CSI-RS.

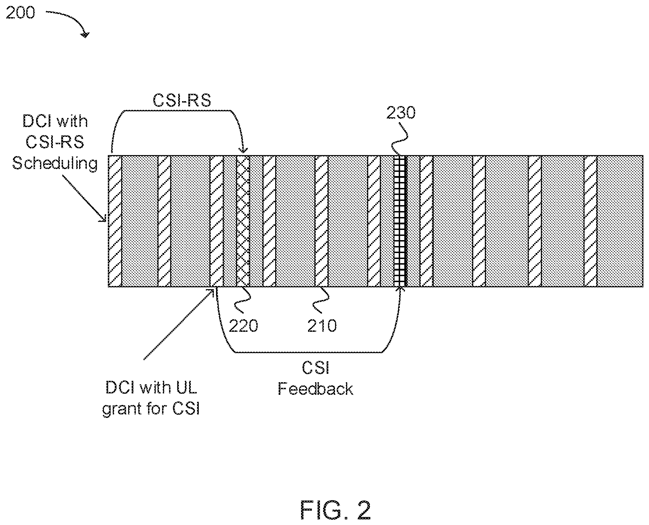

FIG 2 illustrates an example of an aperiodic CSI-RS transmission, using dedicated DCI 210. In accordance with one example, the present technology can implement aperiodic CSI-RS triggering 200 using dedicated DCI 210. The basic principle of the present technology is illustrated in FIG 2, where separate DCIs 210 are used to indicate the aperiodic CSI-RS transmission 220 and CSI report. In one example, dedicated DCI can be transmitted in the control channel transmitted in the common search space and/or UE-specific search space. The control channel can additionally be a PDCCH. The transmission of CSI-RS using common search space can be supported for up to 32 CSI-RS antenna ports, while for dedicated DCI transmitted in the UE-specific search space CSI-RS transmission can be scheduled for up to 8 antenna ports. The DCI can also contain information indicating the uplink subframe that is to be used by the UE for transmission of CSI feedback 230 comprising a CSI report.

In one example, the dedicated DCI 210 can contain the following information about a CSI-RS transmission: the set of scheduled PRBs, a CSI-RS starting OFDM symbol in the subframe, a CSI-RS process index, a new CSI-RS process indication, numerology (i.e. subcarrier spacing, transmission time interval (TTI), etc.) of a CSI-RS transmission, and a number of CSI-RS repetitions. Additionally, the subframe can also be a slot.

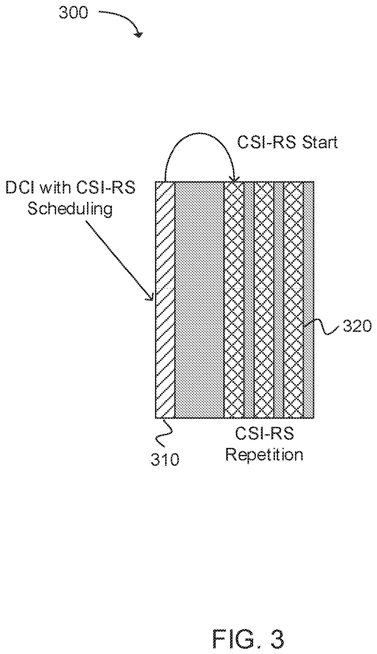

FIG 3 depicts an example of a CSI-RS starting position indication 300. The set of scheduled PRBs can support the transmission with reduced CSI-RS overhead when CSI-RS 320 is not present in every Physical Resource Block (PRB). The information in the DCI 310 can also indicate the starting OFDM symbol in the subframe for the CSI-RS transmission, and the number of repetitions.

In one example, the DCI can also indicate the CSI-RS process index to differentiate the measurements from different transmission points (TP) or different beamforming locations or angles. For a CSI-RS with the same CSI-RS process index, the UE is allowed to perform joint processing (e.g. time domain averaging). When the "new CSI-RS process indication" is toggled in the DCI indicating the CSI-RS transmission, the UE can be configured to not perform averaging of the channel measurements with the channel measurements obtained from the previous CSI-RS transmission. This may occur, for example, when CSI-RS transmissions are sent from different locations or different beam angles.

In one example, the DCI can also indicate the subcarrier spacing for CSI-RS transmission. Larger subcarrier spacing can be indicated to the UE to reduce the CSI-RS overhead (i.e. the time used to transmit the CSI-RS).

In one example, the DCI can also indicate the number of CSI-RS transmissions/repetition in the subframe. For instance, the repetitions can be used to facilitate UE-side beam refinement for CSI feedback, or in cases of low power transmissions in machine type communication (MTC) configured devices.

In one example, the DCI can also indicate the Quasi Co-Location (QCL) with other reference signals to assist synchronization and UE side beamforming selection to be used for CSI feedback. For example, the QCL indication of the CSI-RS can be established with a reference signal used for a UE-side beam training procedure for indication of the CSI-RS associated with a selected beam at the UE.

In these and other embodiments, some radio resource control (RRC) signaling assistance, in an RRC Connection (RRC_Connect) mode, may be also considered. For example, for QCL discussed above, the RRC signaling can be used to indicate the set of beam reference signals, where each beam corresponds to the set of the best beams selected by the UE. In this case, the QCL signaling in the DCI can indicate the specific beam reference signal that can be assumed as QCL-ed. In this example, the UE can adjust the receiving beam according to the QCL indication.

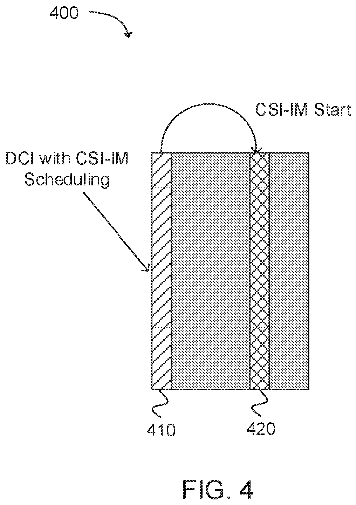

FIG 4 depicts an example of a CSI-IM starting position indication 400. This indication 400 can have applicable embodiments of those that are described above and throughout this disclosure. The embodiments described in FIG 1, FIG 2, and FIG 3 can also be applicable to channel state information (CSI) interference measurement (CSI-IM) 420 resources for CSI. In other words, a serving transmission point (TP) can also indicate aperiodic CSI-IM using a dedicated DCI 410 with the parameters for interference measurements that can comprise of the set of scheduled PRBs, the CSI-IM starting OFDM symbol in the subframe, CSI-IM process index, and new CSI-IM process indication.

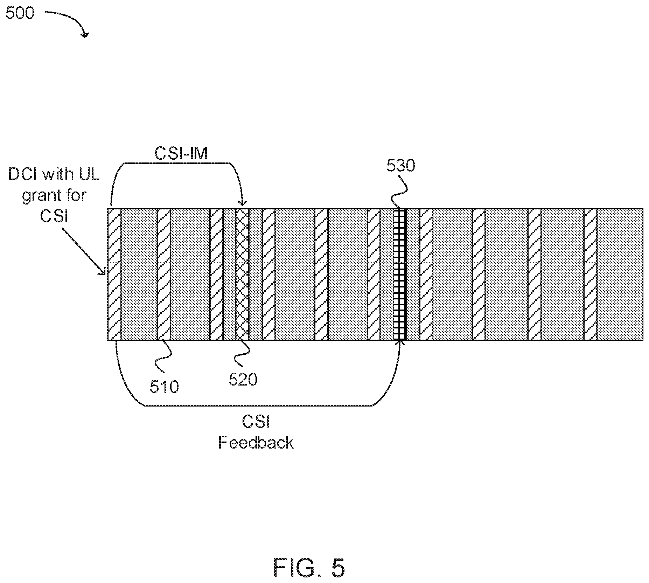

FIG 5 illustrates an example of an aperiodic CSI-RS transmission 500, using DCI 510 scheduling for CSI transmissions. As applicable to all previous embodiments, the embodiments in FIG.5 are just as applicable to interference measurement (CSI-IM) 520 resources for CSI. In other words, serving TP may also indicate aperiodic CSI-IM 520 using the dedicated DCI 510 with the parameters for interference measurements that can comprise of one or more of the set of a scheduled PRBs, a CSI-IM start 520 in the subframe, a CSI-IM process index, and a new CSI-IM process indication.

In one embodiment, the DCI 510 that schedules CSI feedback 530 also contains delay indication for CSI-IM 520 transmission. For example, the DCI 510 may contain the information for the uplink subframe that should be used for transmission of CSI report and parameter 'z' indicating the CSI-IM 520 transmission delay relative to the subframe where DCI 510 is transmitted as indicated in FIG 5. In the special embodiment, the possible 'z' values include '0' indicating that CSI-IM 520 is present in the same subframe where DCI 510 is transmitted.

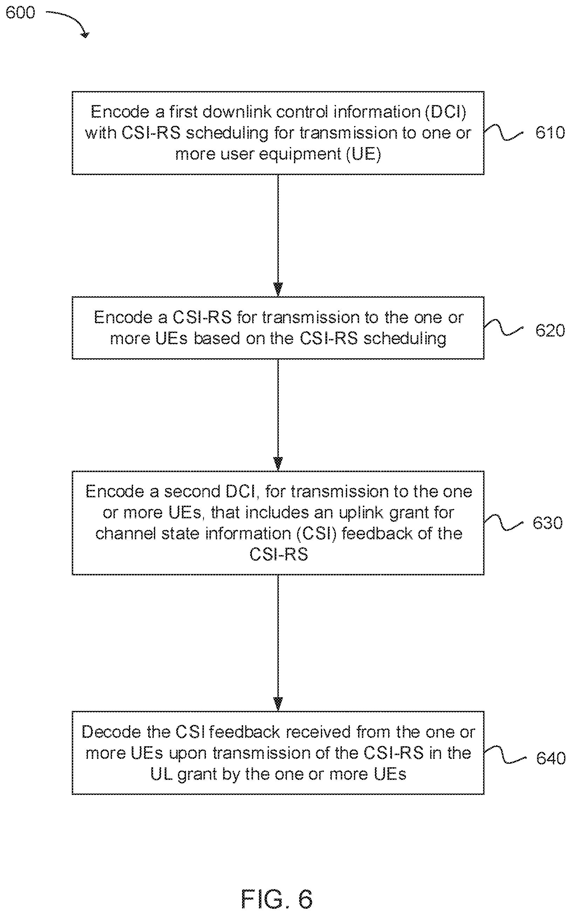

FIG 6 provides functionality 600 of an apparatus of an evolved node B (eNB) or a 5G New Radio Node B (gNB) configured for an aperiodic transmission indication of a channel state information reference signal (CSI-RS). The eNB can comprise of one or more processors configured to: encode a first downlink control information (DCI) with CSI-RS scheduling for transmission to one or more user equipment (UE). The eNB can comprise of one or more processors configured to: encode a CSI-RS for transmission to the one or more UEs based on the CSI-RS scheduling. The eNB can comprise of one or more processors configured to: encode a second DCI, for transmission to the one or more UEs, which includes an uplink grant for channel state information (CSI) feedback of the CSI-RS. The eNB can comprise of one or more processors configured to: decode the CSI feedback received from the one or more UEs upon transmission of the CSI-RS in the UL grant by the one or more UEs.

In one embodiment, wherein the one or more processors are further configured to include in the first DCI, one or more of: a set of scheduled physical resource blocks (PRBs) for transmission of the CSI-RS; a starting OFDM symbol in a slot; a number of CSI-RS symbols in a slot; a CSI-RS process index to associate each CSI-RS transmission with one or more of a selected transmission point (TP) or a selected beam; a new CSI-RS process indication; and a numerology of the CSI-RS transmission.

In one embodiment, one or more processors are further configured to include in the first DCI the set of scheduled PRBs for transmission of the CSI-RS, wherein the CSI-RS is scheduled to be present in each PRB in the set of scheduled PRBs.

In one embodiment, one or more processors are further configured to include in the first DCI a starting OFDM symbol and a number of CSI-RS repetitions.

In one embodiment, one or more processors are further configured to include in the first DCI a subcarrier spacing (SCS) for CSI-RS transmission to the one or more UEs.

In one embodiment, one or more processors are further configured to include in the first DCI a quasi-co-location (QCL) indication for each CSI-RS transmission relative to other CSI-RS transmissions in a plurality of CSI-RS transmissions.

In one embodiment, one or more processors are further configured to encode for transmission using radio resource control (RRC) signaling to the one or more UEs, a QCL indication of a set of reference signals that are quasi-co-located (QCL-ed).

In one embodiment, one or more processors are further configured to encode the first DCI, for transmission in a control channel that is transmitted in a common search space (CSS) or a UE-specific search space.

In one embodiment, one or more processors are further configured to encode the first DCI for transmission, wherein the first DCI is configured to schedule: CSI-RS transmissions for up to 32 antenna ports in a common search space (CSS); or CSI-RS transmissions for up to 8 antenna ports in a UE-specific search space.

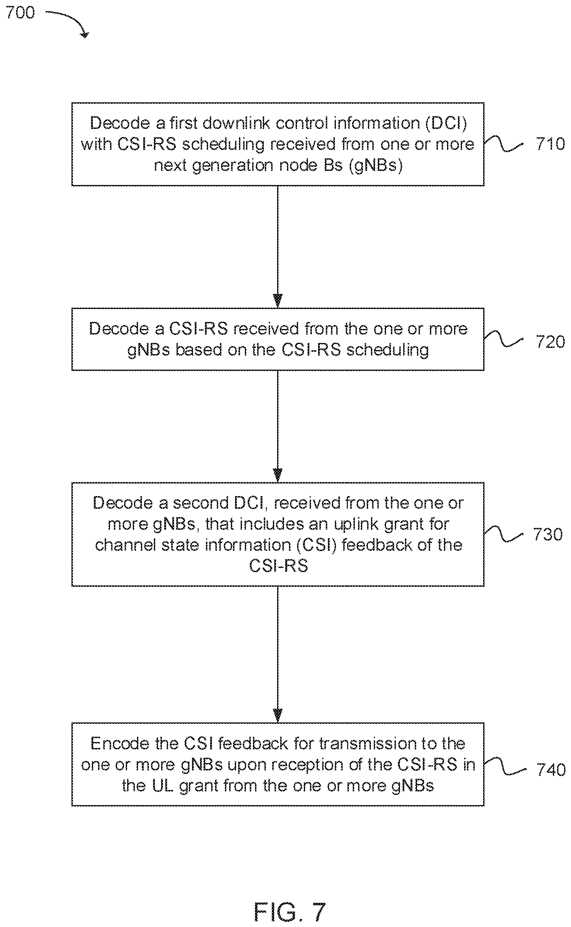

FIG 7 provides functionality 700 of an apparatus of a user equipment (UE) configured for an aperiodic reception indication of a channel state information reference signal (CSI-RS). The UE can comprise of one or more processors configured to decode a first downlink control information (DCI) with CSI-RS scheduling received from one or more next generation node Bs (gNBs) 710. The UE can comprise of one or more processors configured to decode a CSI-RS received from the one or more gNBs based on the CSI-RS scheduling 720. The UE can comprise of one or more processors configured to decode a second DCI, received from the one or more gNBs, which includes an uplink grant for channel state information (CSI) feedback of the CSI-RS 730. The UE can comprise of one or more processors configured to encode the CSI feedback for transmission to the one or more gNBs upon reception of the CSI-RS in the UL grant from the one or more gNBs 740.

In one embodiment, one or more processors are further configured to decode from the first DCI, one or more of: a set of scheduled physical resource blocks (PRBs) for reception of the CSI-RS; a starting OFDM symbol for CSI-RS in a slot; a number of CSI-RS symbols in a slot; a CSI-RS process index to associate each CSI-RS with one or more of a selected transmission point (TP) or a selected beam on which the CSI-RS is received; a new CSI-RS process indication; and a numerology of the CSI-RS transmission.

In one embodiment, one or more processors are further configured to decode from the first DCI the set of scheduled PRBs for reception of the CSI-RS, wherein the CSI-RS is not scheduled to be present in each PRB in the set of scheduled PRBs.

In one embodiment, one or more processors are further configured to decode from the first DCI a starting subframe in an OFDM symbol and a number of CSI-RS repetitions.

In one embodiment, one or more processors are further configured to decode from the first DCI a subcarrier spacing (SCS) for CSI-RS to be received from the one or more gNBs.

In one embodiment, one or more processors are further configured to decode from the first DCI a quasi-co-location (QCL) indication for each CSI-RS transmission relative to other CSI-RS transmissions in a plurality of CSI-RS transmissions.

In one embodiment, one or more processors are further configured to decode for reception via radio resource control (RRC) signaling from the one or more gNBs, a QCL indication of a set of reference signals that are quasi-co-located (QCL-ed).

In one embodiment, one or more processors are further configured to decode the first DCI, received from the one or more gNBs in a control channel that is received in a common search space (CSS) or a UE-specific search space.

In one embodiment, one or more processors are further configured to decode the first DCI, wherein the first DCI is configured to schedule: CSI-RS transmissions for up to 32 antenna ports in a common search space (CSS); or CSI-RS transmissions for up to 8 antenna ports in a UE-specific search space.

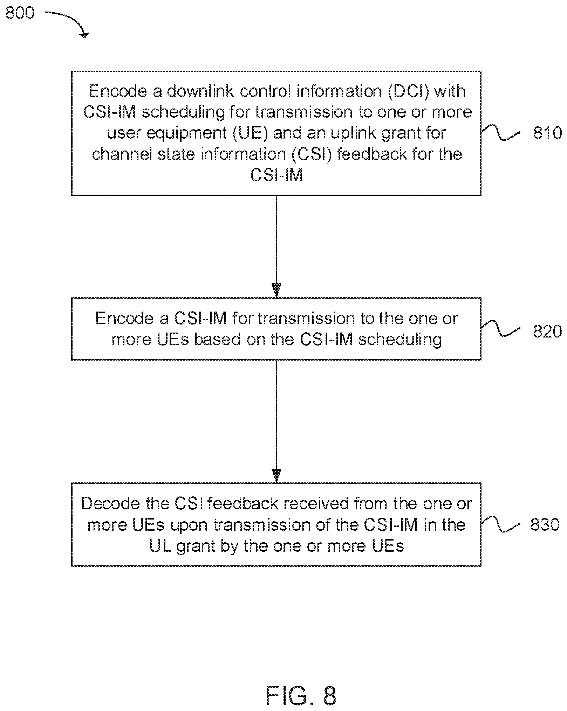

FIG 8 provides functionality 800 of an apparatus of a next generation node B (gNB) configured for an aperiodic transmission indication of a channel state information interference management (CSI-IM). The gNB can comprise of one or more processors configured to encode a downlink control information (DCI) with CSI-IM scheduling for transmission to one or more user equipment (UE) and an uplink grant for channel state information (CSI) feedback for the CSI-IM 810. The gNB can comprise of one or more processors configured to encode a CSI-IM for transmission to the one or more UEs based on the CSI-IM scheduling 820. The gNB can comprise of one or more processors configured to decode the CSI feedback received from the one or more UEs upon transmission of the CSI-IM in the UL grant by the one or more UEs 830.

In one embodiment, one or more processors are further configured to include in the DCI, one or more of: a set of scheduled physical resource blocks (PRBs) for transmission of the CSI-IM; a starting OFDM symbol for CSI-IM in a subframe; a number of CSI-RS transmissions; a CSI-IM process index to associate each CSI-IM transmission with one or more of a selected transmission point (TP) or a selected beam; and a new CSI-IM process indication.

In one embodiment, one or more processors are further configured to include in the DCI a delay indication for CSI-IM transmission, indicating a delay in transmitting the CSI-IM to the one or more UEs relative to a transmission of the DCI.

In one embodiment, one or more processors are further configured to include in the DCI a delay indication of 0, indicating that the CSI-IM is present in a same subframe as the transmission of the DCI.

In one embodiment, one or more processors are further configured to include in the DCI a subcarrier spacing (SCS) for CSI-IM received by the one or more UEs.

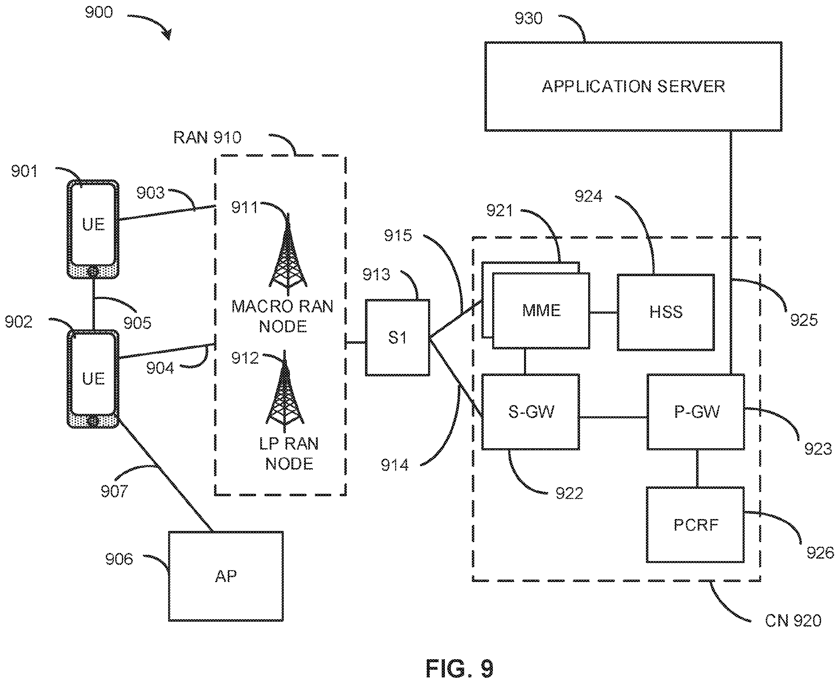

FIG 9 illustrates an architecture of a system 900 of a network in accordance with some embodiments. The system 900 is shown to include a user equipment (UE) 901 and a UE 902. The UEs 901 and 902 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 901 and 902 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 901 and 902 may be configured to connect, e.g., communicatively couple, with a radio access network (RAN) 910 - the RAN 910 may be, for example, an Evolved Universal Mobile Telecommunications System (UMTS) Terrestrial Radio Access Network (E-UTRAN), a NextGen RAN (NG RAN), or some other type of RAN. The UEs 901 and 902 utilize connections 903 and 904, respectively, each of which comprises a physical communications interface or layer (discussed in further detail below); in this example, the connections 903 and 904 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 901 and 902 may further directly exchange communication data via a ProSe interface 905. The ProSe interface 905 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 902 is shown to be configured to access an access point (AP) 906 via connection 907. The connection 907 can comprise a local wireless connection, such as a connection consistent with any IEEE 802.11 protocol, wherein the AP 906 would comprise a wireless fidelity (WiFi^{®}) router. In this example, the AP 906 is shown to be connected to the Internet without connecting to the core network of the wireless system (described in further detail below).

The RAN 910 can include one or more access nodes that enable the connections 903 and 904. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 910 may include one or more RAN nodes for providing macrocells, e.g., macro RAN node 911, and one or more RAN nodes for providing femtocells or picocells (e.g., cells having smaller coverage areas, smaller user capacity, or higher bandwidth compared to macrocells), e.g., low power (LP) RAN node 912.

Any of the RAN nodes 911 and 912 can terminate the air interface protocol and can be the first point of contact for the UEs 901 and 902. In some embodiments, any of the RAN nodes 911 and 912 can fulfill various logical functions for the RAN 910 including, but not limited to, radio network controller (RNC) functions such as radio bearer management, uplink and downlink dynamic radio resource management and data packet scheduling, and mobility management.

In accordance with some embodiments, the UEs 901 and 902 can be configured to communicate using Orthogonal Frequency-Division Multiplexing (OFDM) communication signals with each other or with any of the RAN nodes 911 and 912 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 911 and 912 to the UEs 901 and 902, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 901 and 902. The physical downlink control channel (PDCCH) may carry information about the transport format and resource allocations related to the PDSCH channel, among other things. It may also inform the UEs 901 and 902 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 911 and 912 based on channel quality information fed back from any of the UEs 901 and 902. The downlink resource assignment information may be sent on the PDCCH used for (e.g., assigned to) each of the UEs 901 and 902.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 910 is shown to be communicatively coupled to a core network (CN) 920 -via an S1 interface 913. In embodiments, the CN 920 may be an evolved packet core (EPC) network, a NextGen Packet Core (NPC) network, or some other type of CN. In this embodiment the S1 interface 913 is split into two parts: the S1-U interface 914, which carries traffic data between the RAN nodes 911 and 912 and the serving gateway (S-GW) 922, and the S1-mobility management entity (MME) interface 915, which is a signaling interface between the RAN nodes 911 and 912 and MMEs 921.

In this embodiment, the CN 920 comprises the MMEs 921, the S-GW 922, the Packet Data Network (PDN) Gateway (P-GW) 923, and a home subscriber server (HSS) 924. The MMEs 921 may be similar in function to the control plane of legacy Serving General Packet Radio Service (GPRS) Support Nodes (SGSN). The MMEs 921 may manage mobility aspects in access such as gateway selection and tracking area list management. The HSS 924 may comprise a database for network users, including subscription-related information to support the network entities' handling of communication sessions. The CN 920 may comprise one or several HSSs 924, depending on the number of mobile subscribers, on the capacity of the equipment, on the organization of the network, etc. For example, the HSS 924 can provide support for routing/roaming, authentication, authorization, naming/addressing resolution, location dependencies, etc.

The S-GW 922 may terminate the S1 interface 913 towards the RAN 910, and routes data packets between the RAN 910 and the CN 920. In addition, the S-GW 922 may be a local mobility anchor point for inter-RAN node handovers and also may provide an anchor for inter-3GPP mobility. Other responsibilities may include lawful intercept, charging, and some policy enforcement.

The P-GW 923 may terminate an SGi interface toward a PDN. The P-GW 923 may route data packets between the EPC network 923 and external networks such as a network including the application server 930 (alternatively referred to as application function (AF)) via an Internet Protocol (IP) interface 925. Generally, the application server 930 may be an element offering applications that use IP bearer resources with the core network (e.g., UMTS Packet Services (PS) domain, LTE PS data services, etc.). In this embodiment, the P-GW 923 is shown to be communicatively coupled to an application server 930 via an IP communications interface 925. The application server 930 can also be configured to support one or more communication services (e.g., Voice-over-Intemet Protocol (VoIP) sessions, PTT sessions, group communication sessions, social networking services, etc.) for the UEs 901 and 902 via the CN 920.

The P-GW 923 may further be a node for policy enforcement and charging data collection. Policy and Charging Enforcement Function (PCRF) 926 is the policy and charging control element of the CN 920. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 926 may be communicatively coupled to the application server 930 via the P-GW 923. The application server 930 may signal the PCRF 926 to indicate a new service flow and select the appropriate Quality of Service (QoS) and charging parameters. The PCRF 926 may provision this rule into a Policy and Charging Enforcement Function (PCEF) (not shown) with the appropriate traffic flow template (TFT) and QoS class of identifier (QCI), which commences the QoS and charging as specified by the application server 930.

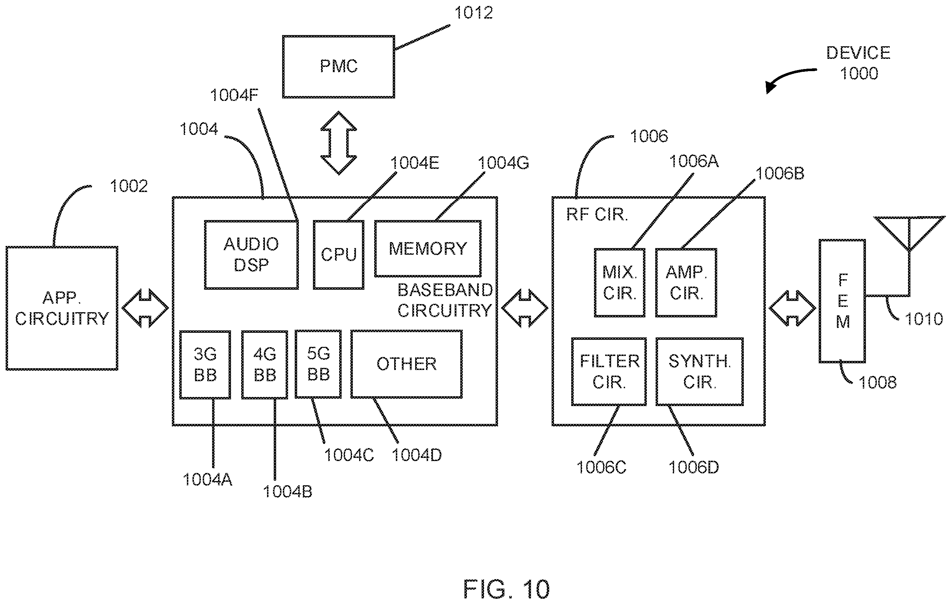

FIG 10 illustrates a diagram of a wireless device (e.g., UE) and a base station (e.g., eNodeB). FIG 10 illustrates example components of a device 1000 in accordance with some embodiments. In some embodiments, the device 1000 may include application circuitry 1002, baseband circuitry 1004, Radio Frequency (RF) circuitry 1006, front-end module (FEM) circuitry 1008, one or more antennas 1010, and power management circuitry (PMC) 1012 coupled together at least as shown. The components of the illustrated device 1000 may be included in a UE or a RAN node. In some embodiments, the device 1000 may include less elements (e.g., a RAN node may not utilize application circuitry 1002, and instead include a processor/controller to process IP data received from an EPC). In some embodiments, the device 1000 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 1002 may include one or more application processors. For example, the application circuitry 1002 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 1000. In some embodiments, processors of application circuitry 1002 may process IP data packets received from an EPC.

The baseband circuitry 1004 may include circuitry such as, but not limited to, one or more single-core or multi-core processors. The baseband circuitry 1004 may include one or more baseband processors or control logic to process baseband signals received from a receive signal path of the RF circuitry 1006 and to generate baseband signals for a transmit signal path of the RF circuitry 1006. Baseband processing circuity 1004 may interface with the application circuitry 1002 for generation and processing of the baseband signals and for controlling operations of the RF circuitry 1006. For example, in some embodiments, the baseband circuitry 1004 may include a third generation (3G) baseband processor 1004A, a fourth generation (4G) baseband processor 1004B, a fifth generation (5G) baseband processor 1004C, or other baseband processor(s) 1004D for other existing generations, generations in development or to be developed in the future (e.g., second generation (2G), si10h generation (6G), etc.). The baseband circuitry 1004 (e.g., one or more of baseband processors 1004A-D) may handle various radio control functions that enable communication with one or more radio networks via the RF circuitry 1006. In other embodiments, some or all of the functionality of baseband processors 1004A-D may be included in modules stored in the memory 1004G and executed via a Central Processing Unit (CPU) 1004E. The radio control functions may include, but are not limited to, signal modulation/demodulation, encoding/decoding, radio frequency shifting, etc. In some embodiments, modulation/demodulation circuitry of the baseband circuitry 1004 may include Fast-Fourier Transform (FFT), precoding, or constellation mapping/demapping functionality. In some embodiments, encoding/decoding circuitry of the baseband circuitry 1004 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1004 may include one or more audio digital signal processor(s) (DSP) 1004F. The audio DSP(s) 1004F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1004 and the application circuitry 1002 may be implemented together such as, for example, on a system on a chip (SOC).

In some embodiments, the baseband circuitry 1004 may provide for communication compatible with one or more radio technologies. For example, in some embodiments, the baseband circuitry 1004 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 1004 is configured to support radio communications of more than one wireless protocol may be referred to as multi-mode baseband circuitry.

RF circuitry 1006 may enable communication with wireless networks using modulated electromagnetic radiation through a non-solid medium. In various embodiments, the RF circuitry 1006 may include switches, filters, amplifiers, etc. to facilitate the communication with the wireless network. RF circuitry 1006 may include a receive signal path which may include circuitry to down-convert RF signals received from the FEM circuitry 1008 and provide baseband signals to the baseband circuitry 1004. RF circuitry 1006 may also include a transmit signal path which may include circuitry to up-convert baseband signals provided by the baseband circuitry 1004 and provide RF output signals to the FEM circuitry 1008 for transmission.

In some embodiments, the receive signal path of the RF circuitry 1006 may include mixer circuitry 1006a, amplifier circuitry 1006b and filter circuitry 1006c. In some embodiments, the transmit signal path of the RF circuitry 1006 may include filter circuitry 1006c and mixer circuitry 1006a. RF circuitry 1006 may also include synthesizer circuitry 1006d for synthesizing a frequency for use by the mixer circuitry 1006a of the receive signal path and the transmit signal path. In some embodiments, the mixer circuitry 1006a of the receive signal path may be configured to down-convert RF signals received from the FEM circuitry 1008 based on the synthesized frequency provided by synthesizer circuitry 1006d. The amplifier circuitry 1006b may be configured to amplify the down-converted signals and the filter circuitry 1006c may be a low-pass filter (LPF) or band-pass filter (BPF) configured to remove unwanted signals from the down-converted signals to generate output baseband signals. Output baseband signals may be provided to the baseband circuitry 1004 for further processing. In some embodiments, the output baseband signals may be zero-frequency baseband signals, although this is not a necessity. In some embodiments, mixer circuitry 1006a of the receive signal path may comprise passive mixers, although the scope of the embodiments is not limited in this respect.

In some embodiments, the mixer circuitry 1006a of the transmit signal path may be configured to up-convert input baseband signals based on the synthesized frequency provided by the synthesizer circuitry 1006d to generate RF output signals for the FEM circuitry 1008. The baseband signals may be provided by the baseband circuitry 1004 and may be filtered by filter circuitry 1006c.

In some embodiments, the mixer circuitry 1006a of the receive signal path and the mixer circuitry 1006a of the transmit signal path may include two or more mixers and may be arranged for quadrature downconversion and upconversion, respectively. In some embodiments, the mixer circuitry 1006a of the receive signal path and the mixer circuitry 1006a of the transmit signal path may include two or more mixers and may be arranged for image rejection (e.g., Hartley image rejection). In some embodiments, the mixer circuitry 1006a of the receive signal path and the mixer circuitry 1006a may be arranged for direct downconversion and direct upconversion, respectively. In some embodiments, the mixer circuitry 1006a of the receive signal path and the mixer circuitry 1006a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1006 may include analog-to-digital converter (ADC) and digital-to-analog converter (DAC) circuitry and the baseband circuitry 1004 may include a digital baseband interface to communicate with the RF circuitry 1006.

In some dual-mode embodiments, a separate radio IC circuitry may be provided for processing signals for each spectrum, although the scope of the embodiments is not limited in this respect.

In some embodiments, the synthesizer circuitry 1006d may be a fractional-N synthesizer or a fractional N/N+1 synthesizer, although the scope of the embodiments is not limited in this respect as other types of frequency synthesizers may be suitable. For example, synthesizer circuitry 1006d may be a delta-sigma synthesizer, a frequency multiplier, or a synthesizer comprising a phase-locked loop with a frequency divider.

The synthesizer circuitry 1006d may be configured to synthesize an output frequency for use by the mixer circuitry 1006a of the RF circuitry 1006 based on a frequency input and a divider control input. In some embodiments, the synthesizer circuitry 1006d may be a fractional N/N+1 synthesizer.

In some embodiments, frequency input may be provided by a voltage controlled oscillator (VCO), although that is not a necessity. Divider control input may be provided by either the baseband circuitry 1004 or the applications processor 1002 depending on the desired output frequency. In some embodiments, a divider control input (e.g., N) may be determined from a look-up table based on a channel indicated by the applications processor 1002.

Synthesizer circuitry 1006d of the RF circuitry 1006 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1006d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1006 may include an IQ/polar converter.

FEM circuitry 1008 may include a receive signal path which may include circuitry configured to operate on RF signals received from one or more antennas 1010, amplify the received signals and provide the amplified versions of the received signals to the RF circuitry 1006 for further processing. FEM circuitry 1008 may also include a transmit signal path which may include circuitry configured to amplify signals for transmission provided by the RF circuitry 1006 for transmission by one or more of the one or more antennas 1010. In various embodiments, the amplification through the transmit or receive signal paths may be done solely in the RF circuitry 1006, solely in the FEM 1008, or in both the RF circuitry 1006 and the FEM 1008.

In some embodiments, the FEM circuitry 1008 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 1006). The transmit signal path of the FEM circuitry 1008 may include a power amplifier (PA) to amplify input RF signals (e.g., provided by RF circuitry 1006), and one or more filters to generate RF signals for subsequent transmission (e.g., by one or more of the one or more antennas 1010).

In some embodiments, the PMC 1012 may manage power provided to the baseband circuitry 1004. In particular, the PMC 1012 may control power-source selection, voltage scaling, battery charging, or DC-to-DC conversion. The PMC 1012 may often be included when the device 1000 is capable of being powered by a battery, for example, when the device is included in a UE. The PMC 1012 may increase the power conversion efficiency while providing desirable implementation size and heat dissipation characteristics.

While FIG 10 shows the PMC 1012 coupled only with the baseband circuitry 1004. However, in other embodiments, the PMC 10 12 may be additionally or alternatively coupled with, and perform similar power management operations for, other components such as, but not limited to, application circuitry 1002, RF circuitry 1006, or FEM 1008.

In some embodiments, the PMC 1012 may control, or otherwise be part of, various power saving mechanisms of the device 1000. For example, if the device 1000 is in an RRC_Connected state, where it is still connected to the RAN node as it expects to receive traffic shortly, then it may enter a state known as Discontinuous Reception Mode (DRX) after a period of inactivity. During this state, the device 1000 may power down for brief intervals of time and thus save power.

If there is no data traffic activity for an e10ended period of time, then the device 1000 may transition off to an RRC_Idle state, where it disconnects from the network and does not perform operations such as channel quality feedback, handover, etc. The device 1000 goes into a very low power state and it performs paging where again it periodically wakes up to listen to the network and then powers down again. The device 1000 may not receive data in this state, in order to receive data, it can transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 1002 and processors of the baseband circuitry 1004 may be used to execute elements of one or more instances of a protocol stack. For example, processors of the baseband circuitry 1004, alone or in combination, may be used execute Layer 3, Layer 2, or Layer 1 functionality, while processors of the application circuitry 1004 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

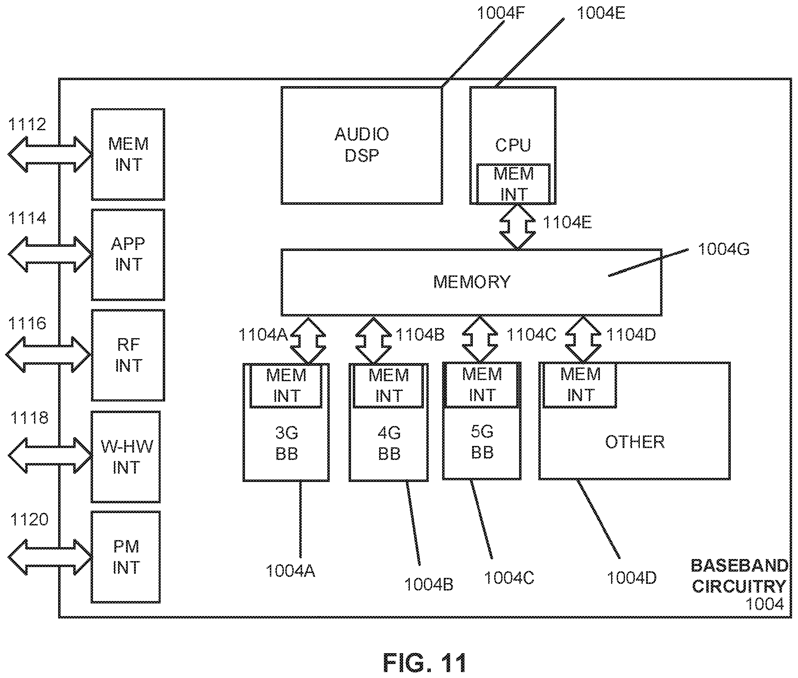

FIG 11 illustrates example interfaces of baseband circuitry in accordance with some embodiments. As discussed above, the baseband circuitry 1004 of FIG 10 may comprise processors 1004A-1004E and a memory 1004G utilized by said processors. Each of the processors 1004A-1004E may include a memory interface, 1104A-1104E, respectively, to send/receive data to/from the memory 1004G

The baseband circuitry 1004 may further include one or more interfaces to communicatively couple to other circuitries/devices, such as a memory interface 1112 (e.g., an interface to send/receive data to/from memory e10ernal to the baseband circuitry 1004), an application circuitry interface 1114 (e.g., an interface to send/receive data to/from the application circuitry 1002 of FIG 10), an RF circuitry interface 1116 (e.g., an interface to send/receive data to/from RF circuitry 1006 of FIG 10), a wireless hardware connectivity interface 1118 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 1120 (e.g., an interface to send/receive power or control signals to/from the PMC 1012.

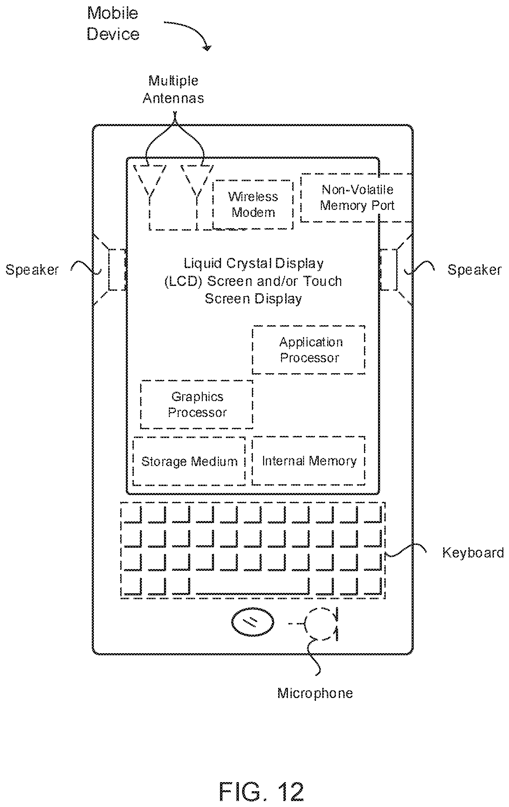

FIG 12 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG 12 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.
While the forgoing examples are illustrative of the principles of the present technology in one or more particular applications, it will be apparent to those of ordinary skill in the art that numerous modifications in form, usage and details of implementation can be made without the exercise of inventive faculty, and without departing from the principles and concepts of the technology. Accordingly, it is not intended that the technology be limited, except as by the claims set forth below.

## Claims

1. An apparatus of a base station configured for an aperiodic transmission indication of a channel state information reference signal, CSI-RS, the apparatus comprising:
one or more processors configured to:
encode a first downlink control information, DCI, with CSI-RS scheduling for transmission to one or more user equipment, UE;
encode a CSI-RS for transmission to the one or more UEs based on the CSI-RS scheduling;
encode a second DCI, for transmission to the one or more UEs, that includes an uplink, UL, grant for channel state information, CSI, feedback of the CSI-RS; and
decode the CSI feedback received from the one or more UEs upon transmission of the CSI-RS in the UL grant by the one or more UEs;
wherein the first DCI comprises:
a set of scheduled physical resource blocks, PRBs, for transmission of the CSI-RS, **characterised in that** the first DCI further comprises:
a starting OFDM symbol in a slot;
a number of CSI-RS symbols in a slot;
a CSI-RS process index to associate each CSI-RS transmission with one or more of a selected transmission point, TP, or a selected beam;
a new CSI-RS process indication which, when toggled, configures the UE to not perform averaging of the channel measurements with the channel measurements obtained from the previous CSI-RS transmissions; and
a numerology of the CSI-RS transmission; and
a memory interface configured to send to a memory the CSI feedback of the CSI-RS.

2. The apparatus of claim 1, wherein the one or more processors are further configured to:
include in the first DCI the set of scheduled PRBs for transmission of the CDI-RS, wherein the CSI-RS is scheduled to be present in each PRB in the set of scheduled PRBs; or
include in the first DCI a starting slot in an OFDM symbol and a number of CSI-RS repetitions.

3. The apparatus of claim 1, wherein the one or more processors are further configured to:
include in the first DCI a subcarrier spacing, SCS, for CSI-RS transmission to the one or more UEs; or
include in the first DCI a quasi-co-location, QCL, indication for each CSI-RS transmission relative to other CSI-RS transmissions in a plurality of CSI-RS transmissions.

4. The apparatus of claim 1, wherein the one or more processors are further configured to encode for transmission using radio resource control, RRC, signaling to the one or more UEs, a QCL indication of a set of reference signals that are quasi-co-located, QCL-ed.

5. The apparatus of claim 1, wherein the one or more processors are further configured to encode the first DCI for transmission, wherein the first DCI is configured to schedule:
CSI-RS transmissions for up to 32 antenna ports in a common search space, CSS;
CSI-RS transmissions for up to 8 antenna ports in a UE-specific search space; or
encode the first DCI, for transmission in a control channel that is transmitted in a common search space, CSS, or a UE-specific search space.

6. An apparatus of a user equipment, UE, configured for an aperiodic reception indication of a channel state information reference signal, CSI-RS, the apparatus comprising:
one or more processors configured to:
decode a first downlink control information, DCI, with CSI-RS scheduling received from one or more next generation node Bs, gNBs;
decode a CSI-RS received from the one or more gNBs based on the CSI-RS scheduling;
decode a second DCI, received from the one or more gNBs, that includes an uplink, UL, grant for channel state information, CSI, feedback of the CSI-RS; and
encode the CSI feedback for transmission to the one or more gNBs upon reception of the UL grant from the one or more gNBs;
wherein the one or more processors are further configured to decode from the first DCI:
a set of scheduled physical resource blocks, PRBs, for reception of the CSI-RS, **characterised in that** the one or more processors are further configured to decode, from the first DCI:
a starting OFDM symbol for CSI-RS in a slot;
a number of CSI-RS symbols in a slot;
a CSI-RS process index to associate each CSI-RS with one or more of a selected transmission point, TP, or a selected beam on which the CSI-RS is received;
a new CSI-RS process indication which, when toggled, configures the UE to not perform averaging of the channel measurements with the channel measurements obtained from the previous CSI-RS transmissions; and
a numerology of the CSI-RS transmission;
and
a memory interface configured to send to a memory the CSI feedback of the CSI-RS.

7. The apparatus of claim 6, wherein the one or more processors are further configured to:
decode from the first DCI the set of scheduled PRBs for reception of the CSI-RS, wherein the CSI-RS is not scheduled to be present in each PRB in the set of scheduled PRBs; or
decode from the first DCI a starting subframe in an OFDM symbol and a number of CSI-RS repetitions.

8. The apparatus of claim 6, wherein the one or more processors are further configured to:
decode from the first DCI a subcarrier spacing, SCS, for CSI-RS to be received from the one or more gNBs; or
decode from the first DCI a quasi-co-location, QCL, indication for each CSI-RS transmission relative to other CSI-RS transmissions in a plurality of CSI-RS transmissions.

9. The apparatus of claim 6, wherein the one or more processors are further configured to encode for reception using radio resource control, RRC, signaling from the one or more gNBs, a QCL indication of a set of reference signals that are quasi-co-located, QCL-ed.

10. The apparatus of claim 6, wherein the one or more processors are further configured to decode the first DCI, received from the one or more gNBs in a control channel that is received in a common search space, CSS, or a UE-specific search space, wherein the first DCI is configured to schedule:
CSI-RS transmissions for up to 32 antenna ports in a common search space, CSS; or
CSI-RS transmissions for up to 8 antenna ports in a UE-specific search space.

11. A method for a base station to perform an aperiodic transmission indication of a channel state information interference management, CSI-IM, comprising:
encode a downlink control information, DCI, with CSI-IM scheduling for transmission to one or more user equipment, UE, and an uplink, UL, grant for channel state information, CSI, feedback for the CSI-IM;
encode a CSI-IM for transmission to the one or more UEs based on the CSI-IM scheduling; and
decode the CSI feedback received from the one or more UEs upon transmission of the CSI-IM in the UL grant by the one or more UEs, wherein the one or more processors are further configured to include in the DCI:
a set of scheduled physical resource blocks, PRBs, for transmission of the CSI-IM, **characterised in that** the one or more processors are further configured to include in the DCI:
a starting OFDM symbol for CSI-IM in a subframe;
a number of CSI-IM symbols in a subframe;
a CSI-IM process index to associate each CSI-IM transmission with one or more of a selected transmission point, TP, or a selected beam on which the CSI-IM is received;
a new CSI-IM process indication which, when toggled, configures the UE to not perform averaging of the channel measurements with the channel measurements obtained from the previous CSI-IM transmissions; and
a memory interface configured to send to a memory the CSI feedback of the CSI-IM.

12. The method of claim 11, wherein the method further comprises the steps to:
include in the DCI a delay indication of 0, indicating that the CSI-IM is present in a same subframe as the transmission of the DCI;
include in the DCI a delay indication for CSI-IM transmission, indicating a delay in transmitting the CSI-IM to the one or more UEs relative to a transmission of the DCI; or
include in the DCI a subcarrier spacing, SCS, for CSI-IM received by the one or more UEs.

## Patentansprüche

1. Vorrichtung einer Basisstation, die für eine aperiodische Übertragungsanzeige eines Kanalzustandsinformationsreferenzsignals, CSI-RS, konfiguriert ist, wobei die Vorrichtung Folgendes umfasst:
einen oder mehrere Prozessoren, die für Folgendes konfiguriert sind:
Codieren einer ersten Downlink-Steuerinformation, DCI, mit CSI-RS-Planung zur Übertragung an ein oder mehrere Benutzergeräte, UEs;
Codieren eines CSI-RS zur Übertragung an das eine oder die mehreren UEs basierend auf der CSI-RS-Planung;
Codieren einer zweiten DCI zur Übertragung an das eine oder die mehreren UEs, die eine Uplink-, UL-, Gewährung für eine Kanalzustandsinformations-, CSI-, Rückmeldung des CSI-RS beinhaltet; und
Decodieren der CSI-Rückmeldung, die von dem einen oder den mehreren UEs bei Übertragung des CSI-RS in der UL-Gewährung durch das eine oder die mehreren UEs empfangen wird;
wobei die erste DCI Folgendes umfasst:
einen Satz geplanter physikalischer Ressourcenblöcke, PRBs, zur Übertragung des CSI-RS, **dadurch gekennzeichnet, dass** die erste DCI ferner Folgendes umfasst:
ein Start-OFDM-Symbol in einem Schlitz;
eine Anzahl von CSI-RS-Symbolen in einem Schlitz;
einen CSI-RS-Prozessindex, um jede CSI-RS-Übertragung mit einem oder mehreren von einem ausgewählten Übertragungspunkt, TP, oder einem ausgewählten Strahl zuzuordnen;
eine neue CSI-RS-Prozessanzeige, die, wenn sie umgeschaltet wird, das UE konfiguriert, um keine Mittelwertbildung der Kanalmessungen mit den Kanalmessungen, die von der vorherigen CSI-RS-Übertragung erhalten wurden, durchzuführen;
und
eine Numerologie der CSI-RS-Übertragung; und
eine Speicherschnittstelle, die konfiguriert ist, um die CSI-Rückmeldung des CSI-RS an einen Speicher zu senden.

2. Vorrichtung nach Anspruch 1, wobei der eine oder die mehreren Prozessoren ferner für Folgendes konfiguriert sind:
Aufnehmen des Satzes geplanter PRBs zur Übertragung des CSI-RS in die erste DCI, wobei das CSI-RS so geplant ist, dass es in jedem PRB in dem Satz geplanter PRBs vorhanden ist; oder
Aufnehmen eines Startschlitzes in einem OFDM-Symbol und einer Anzahl von CSI-RS-Wiederholungen in die erste DCI.

3. Vorrichtung nach Anspruch 1, wobei der eine oder die mehreren Prozessoren ferner für Folgendes konfiguriert sind:
Aufnehmen eines Unterträgerabstands, SCS, zur CSI-RS-Übertragung an das eine oder die mehreren UEs in die erste DCI; oder
Aufnehmen einer Quasi-Colocation-Anzeige, QCL-Anzeige, für jede CSI-RS-Übertragung relativ zu anderen CSI-RS-Übertragungen in einer Vielzahl von CSI-RS-Übertragungen in die erste DCI.

4. Vorrichtung nach Anspruch 1, wobei der eine oder die mehreren Prozessoren ferner zum Codieren einer QCL-Anzeige eines Satzes von Referenzsignalen, die quasi colokalisiert sind, QCL-ed, zur Übertragung unter Verwendung von Funkressourcensteuerungs-Signalisierung, RRC-Signalisierung, an das eine oder die mehreren UEs konfiguriert sind.

5. Vorrichtung nach Anspruch 1, wobei der eine oder die mehreren Prozessoren ferner zum Codieren der ersten DCI zur Übertragung konfiguriert sind, wobei die erste DCI zum Planen von Folgendem konfiguriert ist:
CSI-RS-Übertragungen für bis zu 32 Antennenanschlüsse in einem gemeinsamen Suchraum, CSS;
CSI-RS-Übertragungen für bis zu 8 Antennenanschlüsse in einem UE-spezifischen Suchraum; oder
Codieren der ersten DCI zur Übertragung in einem Steuerkanal, der in einem gemeinsamen Suchraum, CSS, oder einem UE-spezifischen Suchraum übertragen wird.

6. Vorrichtung eines Benutzergeräts, UE, die für eine aperiodische Empfangsanzeige eines Kanalzustandsinformationsreferenzsignals, CSI-RS, konfiguriert ist, wobei die Vorrichtung Folgendes umfasst:
einen oder mehrere Prozessoren, die für Folgendes konfiguriert sind:
Decodieren einer ersten Downlink-Steuerinformation, DCI, mit CSI-RS-Planung, die von einem oder mehreren Knoten-Bs der nächsten Generation, gNBs, empfangen wird;
Decodieren eines CSI-RS, das von dem einen oder den mehreren gNBs empfangen wird, basierend auf der CSI-RS-Planung;
Decodieren einer zweiten DCI, die von dem einen oder den mehreren gNBs empfangen wird, die eine Uplink-, UL-, Gewährung für eine Kanalzustandsinformations-, CSI-, Rückmeldung des CSI-RS beinhaltet; und
Codieren der CSI-Rückmeldung zur Übertragung an den einen oder die mehreren gNBs bei Empfang der UL-Gewährung von dem einen oder den mehreren gNBs;
wobei der eine oder die mehreren Prozessoren ferner zum Decodieren von Folgendem aus der ersten DCI konfiguriert sind:
eines Satzes geplanter physikalischer Ressourcenblöcke, PRBs, zum Empfang des CSI-RS, **dadurch gekennzeichnet, dass** der eine oder die mehreren Prozessoren ferner für Folgendes konfiguriert sind:
Decodieren von Folgendem aus der ersten DCI;
eines Start-OFDM-Symbols für CSI-RS in einem Schlitz;
einer Anzahl von CSI-RS-Symbolen in einem Schlitz;
eines CSI-RS-Prozessindex, um jedes CSI-RS mit einem oder mehreren von einem ausgewählten Übertragungspunkt, TP, oder einem ausgewählten Strahl, auf dem das CSI-RS empfangen wird, zuzuordnen;
einer neuen CSI-RS-Prozessanzeige, die, wenn sie umgeschaltet wird, das UE konfiguriert, um keine Mittelwertbildung der Kanalmessungen mit den Kanalmessungen, die von der vorherigen CSI-RS-Übertragung erhalten wurden, durchzuführen; und
einer Numerologie der CSI-RS-Übertragung;
und
eine Speicherschnittstelle, die konfiguriert ist, um die CSI-Rückmeldung des CSI-RS an einen Speicher zu senden.

7. Vorrichtung nach Anspruch 6, wobei der eine oder die mehreren Prozessoren ferner für Folgendes konfiguriert sind:
Decodieren des Satzes geplanter PRBs zum Empfang des CSI-RS aus der ersten DCI, wobei das CSI-RS nicht so geplant ist, dass es in jedem PRB in dem Satz geplanter PRBs vorhanden ist; oder
Decodieren eines Start-Subframes in einem OFDM-Symbol und einer Anzahl von CSI-RS-Wiederholungen aus der ersten DCI.

8. Vorrichtung nach Anspruch 6, wobei der eine oder die mehreren Prozessoren ferner für Folgendes konfiguriert sind:
Decodieren eines Unterträgerabstands, SCS, für CSI-RS, die von dem einen oder den mehreren gNBs empfangen werden sollen, aus der ersten DCI; oder
Decodieren einer Quasi-Colocation-Anzeige, QCL-Anzeige, für jede CSI-RS-Übertragung relativ zu anderen CSI-RS-Übertragungen in einer Vielzahl von CSI-RS-Übertragungen aus der ersten DCI.

9. Vorrichtung nach Anspruch 6, wobei der eine oder die mehreren Prozessoren ferner zum Codieren einer QCL-Anzeige eines Satzes von Referenzsignalen, die quasi colokalisiert sind, QCL-ed, zum Empfang unter Verwendung von Funkressourcensteuerungs-Signalisierung, RRC-Signalisierung, von dem einen oder den mehreren gNBs konfiguriert sind.

10. Vorrichtung nach Anspruch 6, wobei der eine oder die mehreren Prozessoren ferner zum Decodieren der ersten DCI konfiguriert sind, die von dem einen oder den mehreren gNBs in einem Steuerkanal empfangen wird, der in einem gemeinsamen Suchraum, CSS, oder einem UE-spezifischen Suchraum empfangen wird, wobei die erste DCI zum Planen von Folgendem konfiguriert ist:
CSI-RS-Übertragungen für bis zu 32 Antennenanschlüsse in einem gemeinsamen Suchraum, CSS; oder
CSI-RS-Übertragungen für bis zu 8 Antennenanschlüsse in einem UE-spezifischen Suchraum.

11. Verfahren für eine Basisstation zum Durchführen einer aperiodischen Übertragungsanzeige eines Kanalzustandsinformationsinterferenzmanagements, CSI-IM, das Folgendes umfasst:
Codieren einer Downlink-Steuerinformation, DCI, mit CSI-IM-Planung zur Übertragung an ein oder mehrere Benutzergeräte, UEs, und einer Uplink-, UL-, Gewährung für eine Kanalzustandsinformations-, CSI-, Rückmeldung für das CSI-IM;
Codieren eines CSI-IM zur Übertragung an das eine oder die mehreren UEs basierend auf der CSI-IM-Planung; und
Decodieren der CSI-Rückmeldung, die von dem einen oder den mehreren UEs bei Übertragung des CSI-IM in der UL-Gewährung durch das eine oder die mehreren UEs empfangen wird, wobei der eine oder die mehreren Prozessoren ferner zum Aufnehmen von Folgendem in die DCI konfiguriert sind:
eines Satzes geplanter physikalischer Ressourcenblöcke, PRBs, zur Übertragung des CSI-IM, **dadurch gekennzeichnet, dass** der eine oder die mehreren Prozessoren ferner für Folgendes konfiguriert sind:
Aufnehmen eines Startschlitzes in einem OFDM-Symbol und einer Anzahl von CSI
einem Start-OFDM-Symbol für das CSI-IM in einem Subframe;
einer Anzahl von CSI-IM-Symbolen in einem Subframe;
eines CSI-IM-Prozessindex, um jede CSI-IM-Übertragung mit einem oder mehreren von einem ausgewählten Übertragungspunkt, TP, oder einem ausgewählten Strahl, auf dem das CSI-IM empfangen wird, zuzuordnen;
einer neuen CSI-IM-Prozessanzeige, die, wenn sie umgeschaltet wird, das UE konfiguriert, um keine Mittelwertbildung der Kanalmessungen mit den Kanalmessungen, die
von der vorherigen CSI-IM-Übertragung erhalten wurden, durchzuführen; und
eine Speicherschnittstelle, die konfiguriert ist, um die CSI-Rückmeldung des CSI-IM an einen Speicher zu senden.

12. Verfahren nach Anspruch 11, wobei das Verfahren ferner die folgenden Schritte umfasst:
Aufnehmen einer Verzögerungsanzeige von 0, die anzeigt, dass das CSI-IM in einem gleichen Subframe wie die Übertragung der DCI vorhanden ist, in die DCI;
Aufnehmen einer Verzögerungsanzeige für die CSI-IM-Übertragung, die eine Verzögerung beim Übertragen des CSI-IM an das eine oder die mehreren UEs relativ zu einer Übertragung der DCI anzeigt, in die DCI; oder
Aufnehmen eines Unterträgerabstands, SCS, für CSI-IM, die von dem einen oder den mehreren UEs empfangen werden, in die DCI.

## Revendications

1. Un appareil d'une station de base configurée pour une indication de transmission apériodique d'un signal de référence d'information d'état de canal, CSI-RS, l'appareil comprenant :
un ou plusieurs processeurs configurés pour :
coder une première information de contrôle de liaison descendante, DCI, avec planification CSI-RS pour la transmission à un ou plusieurs équipements utilisateurs, UE ;
coder un CSI-RS pour la transmission aux un ou plusieurs UE sur la base de la planification CSI-RS ;
coder une seconde DCI, pour la transmission aux un ou plusieurs UE, qui inclut une autorisation de liaison montante, UL, pour un retour d'information d'état de canal, CSI, du CSI-RS ; et
décoder le retour CSI reçu à partir des un ou plusieurs UE lors de la transmission du CSI-RS dans l'autorisation UL par les un ou plusieurs UE ;
dans lequel la première DCI comprend :
un ensemble de blocs de ressource physique, PRB, planifiés pour la transmission du CSI-RS, **caractérisé en ce que** la première DCI comprend en outre :
un symbole OFDM de départ dans un slot ;
un nombre de symboles CSI-RS dans un slot ;
un indice de processus CSI-RS pour associer chaque transmission CSI-RS à un ou plusieurs parmi un point de transmission, TP, sélectionné ou un faisceau sélectionné ;
une nouvelle indication de processus CSI-RS qui, lorsqu'elle est commutée, configure l'UE pour ne pas réaliser de moyenne des mesures de canal avec les mesures de canal obtenues à partir des transmissions CSI-RS précédentes ; et
une numérologie de la transmission CSI-RS ; et
une interface mémoire configurée pour envoyer à une mémoire le retour CSI du CSI-RS.

2. L'appareil selon la revendication 1, dans lequel les un ou plusieurs processeurs sont en outre configurés pour :
inclure dans la première DCI l'ensemble de PRB planifiés pour la transmission du CDI-RS, dans lequel le CSI-RS est planifié pour être présent dans chaque PRB dans l'ensemble de PRB planifiés ; ou
inclure dans la première DCI un slot de départ dans un symbole OFDM et un nombre de répétitions CSI-RS.

3. L'appareil selon la revendication 1, dans lequel les un ou plusieurs processeurs sont en outre configurés pour :
inclure dans la première DCI un espacement de sous-porteuse, SCS, pour la transmission CSI-RS vers les un ou plusieurs UE ; ou
inclure dans la première DCI une indication de quasi-colocalisation, QCL, pour chaque transmission CSI-RS par rapport à d'autres transmissions CSI-RS dans une pluralité de transmissions CSI-RS.

4. L'appareil selon la revendication 1, dans lequel les un ou plusieurs processeurs sont en outre configurés pour coder, pour la transmission en utilisant une signalisation de contrôle de ressource radio, RRC, vers les un ou plusieurs UE, une indication QCL d'un ensemble de signaux de référence qui sont quasi colocalisés, QCL.

5. L'appareil selon la revendication 1, dans lequel les un ou plusieurs processeurs sont en outre configurés pour coder la première DCI pour la transmission, dans lequel la première DCI est configurée pour planifier :
des transmissions CSI-RS pour jusqu'à 32 ports d'antenne dans un espace de recherche commun, CSS ;
des transmissions CSI-RS pour jusqu'à 8 ports d'antenne dans un espace de recherche spécifique à l'UE ; ou
coder la première DCI, pour la transmission dans un canal de contrôle qui est transmis dans un espace de recherche commun, CSS, ou un espace de recherche spécifique à l'UE.

6. Un appareil d'un équipement utilisateur, UE, configuré pour une indication de réception apériodique d'un signal de référence d'information d'état de canal, CSI-RS, l'appareil comprenant :
un ou plusieurs processeurs configurés pour :
décoder une première information de contrôle de liaison descendante, DCI, avec planification CSI-RS reçue à partir d'un ou plusieurs nœuds B de prochaine génération, gNB ;
décoder un CSI-RS reçu à partir des un ou plusieurs gNB sur la base de la planification CSI-RS ;
décoder une seconde DCI, reçue à partir des un ou plusieurs gNB, qui inclut une autorisation de liaison montante, UL, pour un retour d'information d'état de canal, CSI, du CSI-RS ; et
coder le retour CSI pour la transmission aux un ou plusieurs gNB lors de la réception de l'autorisation UL à partir des un ou plusieurs gNB :
dans lequel les un ou plusieurs processeurs sont en outre configurés pour décoder, à partir de la première DCI :
un ensemble de blocs de ressource physique, PRB, planifiés pour la réception du CSI-RS, **caractérisé en ce que** les un ou plusieurs processeurs sont en outre configurés pour décoder, à partir de la première DCI :
un symbole OFDM de départ pour CSI-RS dans un slot ;
un nombre de symboles CSI-RS dans un slot ;
un indice de processus CSI-RS pour associer chaque CSI-RS à un ou plusieurs parmi un point de transmission, TP, sélectionné ou un faisceau sélectionné sur lequel le CSI-RS est reçu ;
une nouvelle indication de processus CSI-RS qui, lorsqu'elle est commutée, configure l'UE pour ne pas réaliser de moyenne des mesures de canal avec les mesures de canal obtenues à partir des transmissions CSI-RS précédentes ; et
une numérologie de la transmission CSI-RS ;
et une interface mémoire configurée pour envoyer à une mémoire le retour CSI du CSI-RS.

7. L'appareil selon la revendication 6, dans lequel les un ou plusieurs processeurs sont en outre configurés pour :
décoder à partir de la première DCI l'ensemble de PRB planifiés pour la réception du CSI-RS, dans lequel le CSI-RS n'est pas planifié pour être présent dans chaque PRB dans l'ensemble de PRB planifiés ; ou
décoder à partir de la première DCI une sous-trame de départ dans un symbole OFDM et un nombre de répétitions CSI-RS.

8. L'appareil selon la revendication 6, dans lequel les un ou plusieurs processeurs sont en outre configurés pour :
décoder à partir de la première DCI un espacement de sous-porteuse, SCS, pour que le CSI-RS soit reçu à partir des un ou plusieurs gNB ; ou
décoder à partir de la première DCI une indication de quasi-colocalisation, QCL, pour chaque transmission CSI-RS par rapport à d'autres transmissions CSI-RS dans une pluralité de transmissions CSI-RS.

9. L'appareil selon la revendication 6, dans lequel les un ou plusieurs processeurs sont en outre configurés pour coder, pour la réception en utilisant une signalisation de contrôle de ressource radio, RRC, à partir des un ou plusieurs gNB, une indication QCL d'un ensemble de signaux de référence qui sont quasi colocalisés, QCL.

10. L'appareil selon la revendication 6, dans lequel les un ou plusieurs processeurs sont en outre configurés pour décoder la première DCI, reçue à partir des un ou plusieurs gNB dans un canal de contrôle qui est reçu dans un espace de recherche commun, CSS, ou un espace de recherche spécifique à l'UE, dans lequel la première DCI est configurée pour planifier :
des transmissions CSI-RS pour jusqu'à 32 ports d'antenne dans un espace de recherche commun, CSS ; ou
des transmissions CSI-RS pour jusqu'à 8 ports d'antenne dans un espace de recherche spécifique à l'UE.

11. Un procédé pour qu'une station de base réalise une indication de transmission apériodique d'une gestion d'interférence d'information d'état de canal, CSI-IM, comprenant :
coder une information de contrôle de liaison descendante, DCI, avec planification CSI-IM pour la transmission à un ou plusieurs équipements utilisateurs, UE, et une autorisation de liaison montante, UL, pour un retour d'information d'état de canal, CSI, pour la CSI-IM ;
coder une CSI-IM pour la transmission aux un ou plusieurs UE sur la base de la planification CSI-IM ; et
décoder le retour CSI reçu à partir des un ou plusieurs UE lors de la transmission de la CSI-IM dans l'autorisation UL par les un ou plusieurs UE, dans lequel un ou plusieurs processeurs sont configurés pour en outre inclure dans la DCI :
un ensemble de blocs de ressource physique, PRB, planifiés pour la transmission de la CSI-IM, **caractérisé en ce que** les un ou plusieurs processeurs sont en outre configurés pour inclure dans la DCI :
un symbole OFDM de départ pour CSI-IM dans une sous-trame ;
un nombre de symboles CSI-IM dans une sous-trame ;
un indice de processus CSI-IM pour associer chaque CSI-IM à un ou plusieurs parmi un point de transmission, TP, sélectionné ou un faisceau sélectionné sur lequel la CSI-IM est reçue ;
une nouvelle indication de processus CSI-IM qui, lorsqu'elle est commutée, configure l'UE pour ne pas réaliser de moyenne des mesures de canal avec les mesures de canal obtenues à partir des transmissions CSI-IM précédentes ; avec
une interface mémoire configurée pour envoyer à une mémoire le retour CSI de la CSI-IM.

12. Le procédé selon la revendication 11, dans lequel le procédé comprend en outre des étapes pour :
inclure dans la DCI une indication de retard à 0, indiquant que la CSI-IM est présente dans une même sous-trame que la transmission de la DCI ;
inclure dans la DCI une indication de retard pour la transmission CSI-IM, indiquant un retard dans la transmission de la CSI-IM aux un ou plusieurs UE par rapport à une transmission de la DCI ; ou
inclure dans la DCI un espacement de sous-porteuses, SCS, pour une CSI-IM reçue par les un ou plusieurs UE.
